# EUROPÄISCHE PATENTSCHRIFT

(11) **EP 0 699 878 B1**
(45) Veröffentlichungstag und Bekanntmachung des Hinweises auf die Patenterteilung: **26.05.1999**
(21) Anmeldenummer: 94113709.3
(22) Anmeldetag: 01.09.1994
(51) Int. Cl.: F24H 1/50, F24H 8/00

(54) **Brennwertkessel zum Erwärmen und Speichern von Trinkwasser und Heizungswasser**
High efficiency boiler for heating and storing domestic water and heating water
Chauffe-eau à haute rendement pour chauffer et accumuler de l'eau sanitaire et de l'eau de chauffage

(43) Veröffentlichungstag der Anmeldung: 06.03.1996
(73) Patentinhaber: EWFE Brennwert-Heiztechnik GmbH, 28357 Bremen (DE)
(72) Erfinder: Schlagowski, Günther, D-28213 Bremen (DE); Stapensea, Jan, D-37601 Holzminden (DE); Teper, Herbert, D-35096 Weimar (DE)
(74) Vertreter: Hoormann, Walter, Dr.-Ing.

(56) Entgegenhaltungen:
- EP-A- 0 609 853
- CH-A- 491 335
- DE-A- 2 059 524
- DE-U- 8 422 564

## Beschreibung

Die Erfindung betrifft einen Brennwertkessel nach dem Oberbegriff des Anspruches 1 zum Erwärmen und Speichern von Trinkwasser (Brauchwasser) und Heizungswasser.

Bekannte Heizkessel kommen zur Erwärmung von Heizungs- und/ oder Brauchwasser in Gebäuden und Wohnhäusern häufig zum Einsatz. Zur Brennwertnutzung werden die heißen Verbrennungsgase in Wärmetauscherrohren durch das in dem Kessel befindliche Heizungswasser nach unten geleitet, wobei sie abkühlen, d.h. ihre Wärme an das Heizungswasser abgeben, und schließlich kondensieren. Die Erwärmung von Trinkwasser, sog. Warmwasserbereitung, erfolgt bei bekannten Heizkesseln indirekt über Wärmetauscher nach dem Durchlauferhitzerprinzip oder ähnlichem.

Aus der DE-A-28 37 004 ist ein Heizungskessel bekannt, bei dem das Heizwasser von heißen Verbrennungsgasen erwärmt wird, welche in vertikal verlaufenden Rohren von dem oben angeordneten Brennraum durch den Heizwasserraum abwärts geführt werden und dabei kondensieren. Das Brauchwasser druchläuft eine Rohrwendel, die ebenfalls in dem Heizwasserraum angeordnet ist, von unten nach oben und wird über das Heizwasser erwärmt.

Des weiteren wird in der DE-U-81 12 240.3 ein Heizkessel offenbart, bei welchem die Verbrennungsgase in gleicher Weise in vertikalen Rauchrohren durch den Behälter für Heizungswasser abwärts geleitet werden, wobei das Zapfwasser hier durch eine Zapfwasserschlange läuft, welche einen speziellen Verlauf/eine spezielle Anordnung aufweist und zudem mit einem Mischventil ausgestattet ist.

Ein wesentlicher Nachteil dieser beiden Heizkessel besteht darin, daß sich aufgrund des vertikalen Verlaufes der Wärmetauscherrohre, in welchen die heißen Verbrennungsgase nach unten geleitet werden, lediglich ein vergleichsweise kurzer Strömungsweg ergibt, womit keine optimale Wärmeübertragung an das Heizungswasser zu erzielen ist.

Weiterhin ist höchst nachteilig, daß neben dem notwendigen Wärmetauscher für die heißen Gase zusätzlich ein weiterer Wärmetauscher für das Brauch- bzw. Zapfwasser in Form eines wendelförmgen Rohres bzw. einer Zapfwasserschlange erforderlich ist, was einen höheren Fertigungs-, Montage- und Wartungsaufwand zur Folge hat und somit zu hohen Kosten führt.

Ein weiterer, erhebliche Nachteil besteht zudem darin, daß das Brauch-/Zapfwasser in den genannten Heizkesseln lediglich nach dem Durchlauferhitzerprinzip erwärmt werden kann, wohingegen ein Speicherprinzip nicht realisiert ist.

Aus der DE-U-84 22 564.5 ist weiterhin ein Kondensatheizkessel bekannt, dessen Heizgasrohre schraubenlinienförmig, mit unterschiedlichen Wendeldurchmessern gewendelt und konzentrisch zueinander im Gehäuse, welches Heizwasser enthält, angeordnet sind. Sofern die innere Wendel des Heizgasrohres nicht extrem eng gewickelt ist, kann ein innerer, zylindrischer Hohlkörper ebenfalls von dem Heizwasser durchströmt werden, wobei aber auch möglich ist, durch entsprechende Zu- und Abströmöffnungen Brauchwasser darin aufzuheizen. Der Kessel dient primär Heizzwecken, so daß in erster Linie auf die besondere Anordnung von Brennraum, Heizgasrohren und Kondensatsammelkammer zur Erwärmung von Heizungswasser abgezielt wird, wodurch längere Strömungswege und bessere Wärmeübergangsverhältnisse, insbesondere im Vergleich zu den beiden erstgenannten Heizkesseln, erreicht werden sollen.

Als besonders nachteilig erweist sich jedoch bei allen genannten Heizkesseln, daß sie nicht der Entwicklung gerecht werden, wonach heutzutage in sog. Niedrigenergiehäusern lediglich ein geringer Energiebedarf für die Heizung ("Wärmebedarf") besteht, wohingegen für die Warmwasser-Versorgung, d.h. das Erwärmen und Speichern/Bereithalten von Trinkwasser, ständig ein wesentlich höherer Energiebedarf von bspw. 20 bis 40 kW benötigt wird. Demzufolge ist ein Kombinations-Brennwertkessel wünschenswert, bei welchem aus wirtschaftlichen und ökologischen Gesichtspunkten mit nur einem Wärmeerzeuger (Brenner) neben dem Heizungswasser auch das Trinkwasser erwärmt und bereitgehalten werden kann.

So ist in der DE-U-91 16 438.9 ein Wärmeerzeuger für Warmwasserbereitung und Heizbetrieb offenbart, bei dem in einem doppelwandigen Rohr der Brennraum sowie eine sog. Nachschaltheizfläche in Form eines durchströmbaren Verdrängerkörpers oder eines gewendelten Rohres vorgesehen ist, durch welchen/welches die heißen Gase zur Erwärmung des sich in der Doppelwandung befindenden Heizwassers strömen. Auch hier ist folglich das Bemühen zu erkennen, einen möglichst langen, spiralförmigen Strömungsweg für die heißen Gase zu schaffen, welcher jedoch innerhalb des doppelwandigen Rohres, d.h. des Heizwasserbehälters, verläuft und somit lediglich einen vergleichsweise kleinen mittleren Wendeldurchmesser besitzt. Das doppelwandige Rohr ist i.ü. konzentrisch in einem äußeren Behälter angeordnet, in welchem sich das Brauchwasser befindet, welches folglich das Heizungswasser umgibt und erwärmt.

Des weiteren ist ein ähnlicher Brennwertkessel zur Raumheizung und Trinkwasserwärmung bekannt, welcher einen äußeren Behälter für Trinkwasser und einen inneren, konzentrisch angeordneten Behälter für Heizwasser aufweist, wobei der innere Behälter vertikal verlaufende Verbrennungsgas-Wärmetauscherrohre umgibt, die ringförmig verpreßt sind, d.h. sog. Taschen aufweisen, um den Wärmeübergang zu erhöhen. Als nachteilig erweist sich bei diesen Spezial-Wärmetauscherrohren, daß ihre vergleichsweise teure und aufwendige Fertigung in keinem Verhältnis zu ihrem wärmetechnischen Nutzen steht. Weiterhin ist bei diesem Brennwertkessel höchst nachteilig, daß der halbkugelförmige Strahlungsbrenner nach außen gelegt ist, was neben einer aufwendigen Konstruktion zu erhöhten Strahlungsverlusten aufgrund der vergrößerten Oberfläche führt.

Ein erheblicher Nachteil der beiden zuletzt genannten Anlagen besteht zudem darin, daß jeweils der äußere Behälter das Trinkwasser, welches unter dem höheren Druck von bspw. ca. 10 bar steht, aufnimmt, wohingegen jeweils der innere Behälter das Heizungswasser mit einem niedrigeren Druck von ca. 3 bar enthält. Aus konstruktiver Sicht ist jedoch unmittelbar einzusehen, daß der innere Behälter bzgl. seiner Festigkeit genauer und sicherer auszulegen/zu dimensionieren ist, wenn er unter Zugbelastung steht, d.h. das Trinkwasser mit dem höheren Druck enthält und von dem Heizungswasser mit dem niedrigeren Druck umgeben ist, wodurch ein geringerer Fertigungs-/Montageaufwand, eine höhere Betriebssicherheit und zudem üblicherweise eine Materialerspranis zu erzielen ist.

Aus der CH-A-491 335 ist ein Klein-Heizwasserkessel mit einem als Durchlaufboiler ausgebildeten Brauchwassererhitzer bekannt, welcher innerhalb eines heizungswasserführenden äußeren Behälters oberhalb des Brennerraums angeordnet ist und von diversen senkrechten Rohren durchsetzt ist, die mit dem Innenraum des äußeren Behälters verbunden sind. Der ringförmige Raum zwischen der Innenseite des Mantels des äußeren Behälters und der Außenseite des Mantels des inneren Behälters ist von (leicht schräg zur Vertikalen verlaufenden) Rauchgasrohren durchsetzt, die jeweils an ihrem einen Ende in den Feuerraum und an ihrem anderen Ende in einen Rauchgasabströmstutzen münden.

Bei diesem vorbekannten Kessel strömt das im Feuerraum entstehende Rauchgas mithin durch die vorgenannten Rauchgasrohre auf kürzestem Wege vom Feuerraum zum Rauchgasabströmstutzen mit der Folge, daß das im Feuerraum entstehende heiße Rauchgas seine Wärme nur teilweise an das aufzuheizende Heizungswasser abgeben kann und (unter entsprechenden Energieverlusten) einen erheblichen Teil seiner Wärme in den Schornstein abführt. Außerdem besitzt dieser vorbekannte Kessel noch verschiedene andere Nachteile, wie für den Fachmann ohne weiters erkennbar ist.

Der vorliegenden Erfindung liegt die Aufgabe zugrunde, unter Vermeidung der genannten Nachteile einen Brennwertkessel der eingangs beschriebenen Gattung zu schaffen, der in an sich bekannter Weise sowohl ein Erwärmen und Speichern von Trinkwasser (Brauchwasser) als auch ein Erwärmen und Speichern von Heizungswasser ermöglicht, wobei durch die konstruktive Gestaltung und Anordnung der einzelnen Elemente/Bauteile zum einen der Fertigungs- und Materialaufwand bei hoher Betriebssicherheit gering zu halten und zum anderen eine möglichst hohe Wärmeübertragung an das Wasser sowie ein möglichst optimaler Brennwertnutzen zu erzielen sein soll, ohne daß ein zusätzlicher, zweiter Wärmetauscher (bspw. für das Trinkwasser) erforderlich ist. Des weiteren soll durch die konstruktive und wärmetechnische Auslegung erreicht werden, daß der Brennwertkessel auch bei großen Wasserhärten des Trinkwassers mit möglichst hohem Wirkungsgrad/Brennwertnutzen betrieben werden kann, ohne daß es aufgrund zu hoher Wandungstemperaturen zu den im Stand der Technik seit langem bekannten, Ablagerungen/ Kalkschichten an der brauchwasserseitigen Behälterfläche kommt, welche die Wärmeübertragung behindern und in Extremfällen zum Überhitzen der Flächen führen können.

Die Lösung dieser Aufgabe erfolgt erfindungsgemäß durch die kennzeichnenden Merkmale des Anspruches 1. Bevorzugte Ausgestaltungen sind in den Unteransprüchen beschrieben.

Ein wesentlicher Vorteil des erfindungsgemäßen Brennwertkessels ergibt sich daraus, daß die Wärmetauscherrohre nicht nur den äußeren (Heizungswasser-)Behälter, sondern auch den inneren (Trinkwasser-)Behälter räumlich nahezu vollständig erfassen, wobei die heißen Verbrennungsgase über die Wärmetauscherrohre zunächst das Heizungswasser erwärmen, und das Trinkwasser über die Speicherbehälteroberfläche von dem Heizungswasser erwärmt wird.

Ein weiterer Vorteil besteht darin, daß nicht nur der (erwärmte) Speicherinhalt des inneren (Trinkwasser-)Behälters immer vollständig zur Verfügung steht, sondern auch das Heizsystem ständig betriebsbereit ist, so daß bspw. an kühlen Sommertagen zur Beheizung des Bades keine separate Aufheizung eines Heizkessels erforderlich ist.

Letzteres erweist sich bspw. auch in Verbindung mit der Nutzung von Solarenergie als besonders vorteilhaft, indem das Trinkwasser zunächst in einem als Vorerwärmer dienenden, externen Trinkwasserspeicher durch einen Solarkollektor vorgewärmt wird, und anschließend in den inneren (Trinkwasser-)Behälter geleitet wird, in welchem es zum einen das Trinkwasser im unteren Bereich erwärmt, zum anderen jedoch über die Speicherbehälteroberfläche auch das Heizungswasser erwärmt. Hierdurch wird neben der Erwärmung von Trinkwasser zusätzlich gewährleistet, daß das Heizsystem immer, d.h. insbesondere auch an kühlen Sommertagen, betriebsbereit ist, ohne daß der Brenner eingeschaltet werden muß.

Ein wesentlicher Vorteil besteht zudem darin, daß der erfindungsgemäße Brennwertkessel für den inneren (Trinkwasser-)Behälter und den äußeren (Heizungswasser-)Behälter lediglich eine Wärmedämmung benötigt. Darüber hinaus ist der erfindungsgemäße Brennwertkessel vollständig/anschlußfertig verrohrt, was eine einfache und kostengünstige Montage und Installation gewährleistet.

Bevorzugt ist im oberen Bereich des äußeren Behälters ein Temperatursensor, und im inneren Behälter ein (Speicher-)Temperatursensor angeordnet, damit die Temperatur des Trink- und Heizungswassers erfaßt und auf bestimmten Werten gehalten bzw. geregelt werden kann.

Höchst bevorzugt ist an der Oberseite des äußeren Behälters ein Heizungswasservorlaufanschluß angeordnet, wodurch das Gegenstromprinzip verwirklicht ist, d.h. das Heizungswasser wird dem äußeren Behälter unten zugeführt und oben entnommen, wohingegen die heißen Verbrennungsgase in den Wärmetauscherrohren spiralförmig von oben nach unten geführt werden.

Weiterhin ist im oberen Bereich des inneren Behälters bevorzugt ein Warmwasserrohr angeschlossen, welches zur Unterseite des inneren Behälters verläuft, wo ein Warmwasseranschluß für Trinkwasser angeordnet ist.

Bevorzugt ist das spiralförmige Wärmetauscherrohr konzentrisch zum inneren Behälter angeordnet. Die Verbrennungsgase bewegen sich in dem spiralförmigen Wärmetauscherrohr mit hohen Geschwindigkeiten, so daß keine längeren Verweilzeiten des Kondensats im Wärmetauscherrohr auftreten und somit kein Auswaschen von Schwermetallen aus dem Edelstahl auftrifft.

Höchst bevorzugt ist der Durchmesser bzw. die Querschnittsfläche des Wärmetauscherrohres so gewählt, daß es den Zwischenraum zwischen dem inneren und äußeren Behälter in horizontaler Richtung nahezu vollständig ausfüllt. Aufgrunddessen ergeben sich lediglich sehr schmale Räume zwischen dem Wärmetauscherrohr und dem äußeren Behälter einerseits, sowie dem Wärmetauscherrohr und dem inneren Behälter andererseits, so daß das Heizungswasser im wesentlichen spiralförmig im Zwischenraum zwischen dem inneren und äußeren Behälter, also insbesondere in dem sich zwischen den Wendeln des Wärmetauscherrohres ergebenden spiral-/schneckenförmigen Raum, nach oben geleitet wird. Hierdurch wird das Gegenstromprinzip in besonders vorteilhafter Weise verwirklicht, da sowohl die heißen Verbrennungsgase als auch das Heizungswasser spiralförmig aneinander vorbeigeführt werden, was u.a. zu einer vergrößerten Wärmeübertragungsfläche führt. Folglich liegt die Temperatur der Abgase am Austritt lediglich wenige Kelvin (1-3 K) über der Heizungswassertemperatur am Heizungswasserrücklaufanschluß.

Die Steigung des spiralförmigen Wärmetauscherrohres ist bevorzugt im unteren Bereich des äußeren Behälters kleiner als in dessen oberen Bereich, d.h. die Wärmetauscherrohre verlaufen im unteren Bereich mit einem geringeren vertikalen Abstand zueinander, wodurch der Strömungsweg der heißen Verbrennungsgase noch zusätzlich verlängert wird, was zu einer Erhöhung der Wärmeübertragung an das Wasser führt und eine intensive Kondensation der heißen Verbrennungsgase, insbesondere auch im Sommerbetrieb bei reiner Trinkwassererwärmung, sicherstellt.

Weiterhin ist bevorzugt, daß die spiralförmigen Wärmetauscherrohre als Doppelspiralen ausgebildet sind, wodurch die von den heißen Verbrennungsgasen abzugebende Wärmemenge und somit der Wirkungsgrad des Brennwertkessels erhöht wird.

Höchst bevorzugt ist die Grundfläche des inneren Behälters erheblich größer als die halbe Grundfläche des äußeren Behälters, so daß eine erhebliche/ausreichende Trinkwassermenge erwärmt und gespeichert, d.h. bereitgehalten werden kann, was insbesondere für den Einbau in heutigen sog. Niedrigenergiehäusern von Bedeutung ist, da deren Energiebedarf für die Trinkwassererwärmung/-versorgung im Vergleich zum Wärmebedarf hoch ist.

Des weiteren beträgt die Grundfläche des inneren Behälters bevorzugt 70 % - 85 % oder 55 % - 70 %.

Höchst bevorzugt ist das Speichervolumen für Trinkwasser des inneren Behälters größer als das Speichervolumen für Heizungswasser des äußeren Behälters, so daß der erfindungsgemäße Brennwertkessel mehr Trinkwasser als Heizungswasser speichern kann.

Weiterhin ist bevorzugt, daß ein Rohr vom oberen Bereich des äußeren Behälters in den inneren Behälter verläuft, und in dessen unterem Bereich als Wendel ausgebildet ist, wodurch auch im unteren Bereich das Trinkwasser ständig auf einer hohen Temperatur gehalten wird.

Bevorzugt ist zum einen ein Heizungwasservorlaufrohr und zum anderen ein Heizungswasserrücklaufrohr über ein Abzweigrohr mit einem 3-Wege-Ventil verbunden, welches von einem Stellmotor, der mit einer Regeleinrichtung verbunden ist, geschaltet/gesteuert wird. Auf diese Weise kann die Heizungswassertemperatur in der Heizeinrichtung geregelt werden. Der Einsatz eines 3-Wege-Ventils bzw. 3-Wege-Mischers ist höchst vorteilhaft, da er in seinem gesamten Leistungsbereich stufenlos zu regeln ist (0-100%). Aufgrund dessen ist die Einspritzung von heißem Heizungswasser in den Heizkreislauf bei geringer Wärmeabnahme, also in der Übergangszeit mit geringem Wärmebedarf, feiner zu dosieren, was zu gleichmäßigeren Temperaturen in/vor der Heizeinrichtung führt.

Des weiteren ist bevorzugt, daß am Heizungswasservorlaufrohr ein Rohr angeschlossen ist, durch welches (erwärmtes) Heizungswasser mittels einer Pumpe zum Heizungswasserrücklaufrohr geleitet wird, so daß der Heizkreislauf umgangen wird, um ausschließlich Trinkwasser im sog. Schnelladesystem zu erwärmen. Auf diese Weise können Temperaturunterschiede in verschiedenen Bereichen des (Trinkwasser-) und (Heizungswasser-)Behälters ausgeglichen werden. Folglich wird sichergestellt, daß das gesamte Trinkwasser, also auch im unteren Bereich des inneren Behälters, aufgeheizt wird.

Höchst bevorzugt sind das Heizungwasservorlaufrohr und das Heizungswasserrücklaufrohr mit einem Plattenwärmetauscher verbunden, wobei vor und hinter dem Plattenwärmetauscher (drehzahlgeregelte) Pumpen an dem Heizungswasservorlaufrohr angeordnet sind. Durch den Plattenwärmetauscher werden der Kesselkreislauf und der Heizungskreislauf voneinander getrennt, d.h. es liegen zwei in sich geschlossene Systeme vor, wodurch im Kesselkreislauf Verschmutzungen durch Schmutzrückstände aus der Heizeinrichtung und Korrosion durch Sauerstoffdiffusion in Kunststoffußbodensystemen vermieden werden.

Weiterhin ist bevorzugt, daß wenigstens ein (Vorlauf-)Temperatursensor an dem Heizungswasservorlaufrohr und mehrere (Rücklauf-)Temperatursensoren an dem Heizungswasserrücklaufrohr angeordnet sind.

Des weiteren sind ein (Außen-)Temperaturfühler und/oder der (Speicher-)Temperatursensor und/oder die (Vorlauf-) sowie (Rücklauf-)Temperatursensoren bevorzugt Bestandteil einer Regeleinrichtung.

Bevorzugt ist der Kaltwasseranschluß für Trinkwasser mit einem Trinkwasserspeicher verbunden, welcher durch Strahlungsenergie, insbesondere über einen Solarkollektor, beheizt wird, so daß eine aus ökologischer Sicht höchst vorteilhafte Nutzung von Solarenergie möglich ist. Während der Sommermonate kann folglich das Trinkwasser in einem Trinkwasserspeicher, d.h. einem Vorerwärmer, welcher mit einem Solarkollektor betrieben wird, vorgewärmt werden, so daß es dann über die Speicherbehälteroberfläche des inneren Behälters das Heizungswasser erwärmen kann, so daß das Heizsystem zur Verfügung steht, ohne daß der Brenner angeschaltet werden muß.

Bevorzugt ist ein Überströmventil vor der Heizeinrichtung angeordnet, durch welches Heizungswasser vom Heizungswasservorlaufrohr zum Heizungswasserrücklaufrohr geleitet wird, wobei das Überströmventil öffnet, wenn bspw. im Heizkreislauf keine Wärme abgenommen wird, d.h. alle Heizkörperventile geschlossen sind.

Im folgenden wird die Erfindung anhand eines Ausführungsbeispiels unter Bezugnahme auf eine Zeichnung weiter erläutert. Es zeigt:
- Fig. 1: eine Seitenansicht eines ersten Ausführungsbeispiels des erfindungsgemäßen Brennwertkessels zum Erwärmen und Speichern von Trinkwasser und Heinzungswasser im Schnitt;
- Fig. 2: eine Seitenansicht eines zweiten Ausführungsbeispiels des erfindungsgemäßen Brennwertkessels zum Erwärmen und Speichern von Trinkwasser und Heizungswaser im Schnitt;
- Fig. 3: eine schematische Darstellung des erfindungsgemäßen Brennwertkessels zum Erwärmen und Speichern von Trinkwasser und Heizungswasser zur Nutzung von Solarenergie.

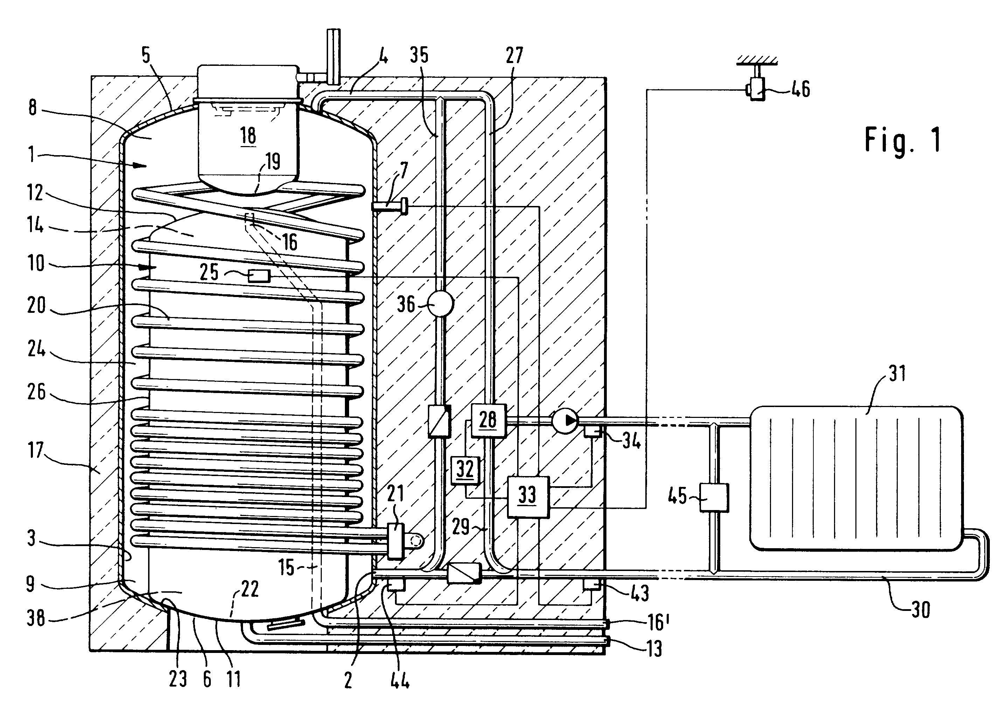

Fig. 1 zeigt eine Seitenansicht auf den erfindungsgemäßen Brennwertkessel mit einem im wesentlichen zylindrischen, vertikalen (Heizungswasser-)Behälter 1, welcher einen Heizungswasserrücklaufanschluß 2 im unteren Bereich der Seitenwand 3 und einen Heizungswasservorlaufanschluß 4 in der Oberseite 5 aufweist, wobei die Oberseite 5 und die Unterseite 6 des äußeren Behälters 1 gewölbt ausgebildet sind. Im oberen Bereich 8 des äußeren Behälters 1 ist ein Temperatursensor 7 zur Messung der Heizungswassertemperatur angeordnet, so daß diese auf einem bestimmten Wert, bspw. einer Maximaltemperatur (z.B. 60°C) gehalten bzw. geregelt werden kann.

In dem äußeren Behälter 1 ist ein innerer <Trinkwasser-)Behälter 10 konzentrisch angeordnet, dessen Unterseite 11 im vorliegenden Ausführungsbeispiel in gleicher Weise wie die des äußeren Behälters 1 gewölbt ist, so daß der innere Behälter 10 gleichsam in dem äußeren 1 aufrecht steht. Da der aus Edelstahl hergestellte, innere Behälter 10 eine geringere Höhe als der äußere 1 hat, ist seine Oberseite 12 von dem im äußeren Behälter aufgenommenen Heizungswasser umgeben. Der innere Behälter 10 weist an seiner Unterseite 11 einen Kaltwasseranschluß 13 für Trinkwasser auf. Das erwärmte Trinkwasser wird dem inneren Behälter 10 aus dessen oberen Bereich 14 entnommen und in einem Warmwasserrohr 15, welches durch den inneren Behälter 10 nach unten verläuft, zu dessen Unterseite 11 geleitet, wo ein Wamwasseranschluß 16' für Trinkwasser angeordnet ist, so daß sowohl der Kaltwasser- 13 als auch der Warmwasseranschluß 16' für Trinkwasser unterhalb der Unterseite 11 des inneren Behälters 10 aus dem Gehäuse 17, welches wärmeisoliert ist, geführt werden.

An der Oberseite 5 des äußeren Behälters 1 ist ein Brennraum 18 konzentrisch zum äußeren und inneren Behälter 1, 10 angeordnet, welcher sich von außen, d.h. von oben bis in den oberen Bereich 8 des äußeren Behälters 1 hinein erstreckt, so daß der innere Behälter 10 und der Brennraum 18 mit einem dazwischenliegenden Freiraum, d.h. mit einem vertikalen Abstand zueinander, übereinander angeordnet sind. Der Boden 19 des Brennraums 18 ist nach unten gewölbt und weist somit eine Senke zum Kondensatabfluß auf. Eine derartige Anordnung des Brennraums ist ersichtlich lediglich eine bevorzugte Ausgestaltung im Sinne des erfindungsgemäßen Brennwertkessels. Alternativ könnte ein Brennraum bspw. auch seitlich an dem äußeren Behälter angebracht sein, wobei dann der Boden des Brennraums zum Kondensatabfluß geneigt wäre. In jedem Fall ist der Brennraum 18 im oberen Bereich 8 angeordnet, wodurch eine innere Auskühlung bei Brennerstillstand, d.h. sog. Thermosyphonverluste, vermieden werden.

An dem Boden 19 des Brennraums 18 ist wenigstens ein vorzugsweise aus Edelstahl hergestelltes, spiralförmiges Wärmetauscherrohr 20 angeschlossen, welches im vorliegenden Ausführungsbeispiel als Doppelspirale ausgebildet ist. Die Wärmetauscherrohre 20 verlaufen spiral-/wendelförmig durch den äußeren Behälter 1 in dessen unteren Bereich 9, wo sie aus dem äußeren Behälter 1 sowie dem Gehäuse 17 geführt werden und ein Abgasanschluß 21 angeordnet ist. Da die Grundfläche 22 des inneren Behälters 10 wesentlich größer als die halbe Grundfläche 23 des äußeren Behälters 1 ist, verlaufen die Wärmetauscherrohre 20 insbesondere in dem sich dadurch ergebenden Zwischenraum 24 zwischen dem äußeren und inneren Behälter 1, 10. Im vorliegenden Ausführungsbeispiel besitzt der äußere Behälter 1 ein Volumen von ca. 200 1, welches nicht vollständig zur Aufnahme von Heizungswasser nutzbar ist, da die Volumina des inneren Behälters 10 (hier: 100 1), des Brennraums 18 und des Wärmetauscherrohres 20 hiervon abzuziehen sind.

Aus den genannten Höhen- und Grundflächenverhältnissen der Behälter 1, 10 ergibt sich, daß der innere Behälter 10 sowohl an seiner Oberseite 12 als auch an seiner Seitenwand/Mantelfläche 26 von dem im äußeren Behälter 1 befindlichen Heizungswasser umgeben ist. Die Wärmetauscherrohre 20 erwärmen folglich zunächst das Heizungswasser, wobei sie den äußeren Behälter 1, also insbesondere dessen oberen Bereich 9 sowie den Zwischenraum 24, zur Schaffung gleichmäßiger Temperaturverhältnisse räumlich sehr gut erfassen. Der spiralförmige Verlauf der Wärmetauscherrohre 20 führt darüber hinaus zu hohen Turbulenzen in den Rohren, wodurch eine ausgezeichnete Wärmeübertragung an das Heizungswasser erzielt wird. Zudem wird durch die Anwendung des Gegenstromprinzips, d.h. die heißen Verbrennungsgase werden spiralförmig von oben nach unten geleitet, wohingegen das Heizungswasser dem äußeren Behälter 1 unten zugeführt und oben entnommen wird, die Wärmeübertragung an das Wasser erhöht und die Temperaturverhältnisse in den Behältern 1, 10 vergleichmäßigt. Da die Querschnittsfläche der Wärmetauscherrohre 20 so gewählt ist, daß sie den Zwischenraum 24 in horizontaler Richtung nahezu vollständig ausfüllen, wird das Heizungswasser folglich in dem sich zwischen den Wendeln der Wärmetauscherrohre 20 ergebenden spiral-/schneckenförmigen Raum spiralförmig nach oben geleitet, wobei nur eine sehr kleine Menge des Heizungswassers in den schmalen Bereich zwischen den Wärmetauscherrohren 20 und dem äußeren Behälter 10 einerseits, sowie den Wärmetauscherrohren 20 und dem inneren Behälter 10 andererseits gelangt. Die Temperatur des Trinkwassers wird mit einem (Speicher-)Temperatursensor 25, der im inneren Behälter 10 angeordnet ist, erfaßt und an eine Regeleinrichtung 33, 33' weitergegeben.

Durch die besondere konstruktive Gestaltung des erfindungsgemäßen Brennwertkessels wird gleichzeitig insbesondere das um den inneren Behälter 10 befindliche Heizungswasser von den Wärmetauscherrohren 20 erwärmt, da die spiralförmig verlaufenden Wärmetauscherrohre 20 die Seitenwand/Mantelfläche 26 des inneren Behälters 10 nahezu vollständig umgeben, wobei durch die Wahl des mittleren Wendeldurchmessers der Wärmetauscherrohre 20 der Abstand zwischen den Wärmetauscherrohren 20 und der Seitenwand/Mantelfläche 26 klein zu wählen ist.

Wie in Fig. 1 zu erkennen, gelangt im vorliegenden Ausführungsbeispiel erwärmtes Heizungswasser von dem Heizungswasservorlaufanschluß 4 über ein Heizungswasservorlaufrohr 27 zu einem 3-Wege-Ventil 28. Das 3-Wege-Ventil 28 ist des weiteren mit einem Abzweigrohr 29 verbunden, durch welches (abgekühltes) Heizungswasser aus einem Heizungswasserrücklaufrohr 30, das zwischen einer Heizeinrichtung 31 und dem Heizungswasserrücklaufanschluß 2 verläuft, abgeleitet wird. Das 3-Wege-Ventil 28 wird von einem Stellmotor 32, der mit einer Regeleinrichtung 33 verbunden ist, geschaltet/gesteuert. Die Regeleinrichtung 33 weist u.a. einen (Vorlauf-)Temperatursensor 34 auf, so daß die Heizungswassertemperatur in der Heizeinrichtung 31 über die von dem 3-Wege-Ventil 28 zugeführte Menge bzw. Mischung an erwärmtem oder abgekühltem Heizungswasser zu regeln ist. Diese sog. 3-Wege-Einspritzschaltung mischt das Rücklaufwasser dem Vorlaufwasser bei, um eine gewünschte, in Abhängigkeit von der Außentemperatur geführte Vorlauftemperatur des Heizungwassers sicherzustellen. Die Einspritzung von heißem (Kessel-)Heizungswasser läßt sich mit dem 3-Wege-Mischer 28 auch bei geringer Wärmeabnahme fein dosieren, was zu gleichmäßigeren Temperaturen am (Vorlauf-)Temperatursensor 34 führt. Über ein Rohr 35 sowie eine Pumpe 36 kann der beschriebene Heizkreislauf umgangen werden, sofern nur Trinkwasser im sog. Schnelladesystem zu erwärmen ist.

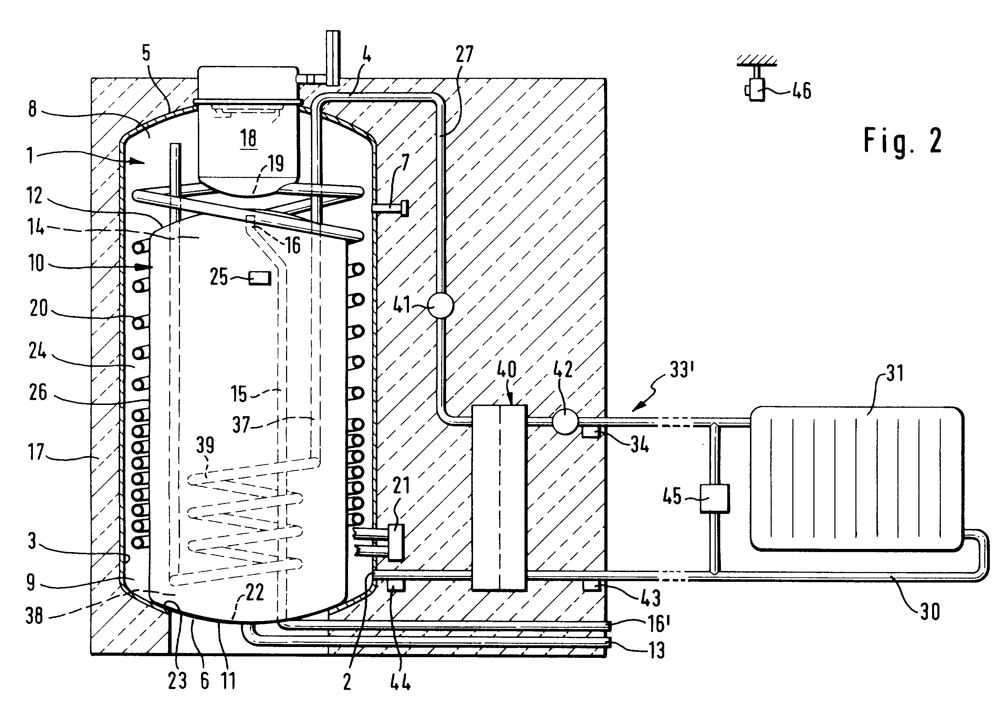

Fig. 2 zeigt ein zweites Ausführungsbeispiel des erfindungsgemäßen Brennwertkessels, bei welchem die wesentlichen Bauelemente, wie bspw. der äußere Behälter 1, der innere Behälter 10 oder das Wärmetauscherrohr 20, in gleicher Weise wie in dem in Fig. 1 dargestellten, ersten Ausführungsbeispiel konstruiert bzw. angeordnet sind.

Im zweiten Ausführungsbeispiel wird zusätzlich Heizungswasser aus dem oberen Bereich 8 des äußeren Behälters 1 durch ein Edelstahl-Rohr 37, welches nach unten in den inneren (Speicher-)Behälter 10 für Trinkwasser hinein verläuft, abgesaugt. Im unteren Bereich 38 des inneren Behälters 10 ist das Rohr 37 als doppelt gewickelte Wendel 39 ausgebildet, wodurch das Trinkwasser auch im unteren Bereich 38 ständig auf einer hohen Temperatur gehalten wird. Dieses aus der Wendel 39 im inneren Behälter 10 austretende Heizungswasser ist aufgrund des Wärmeentzugs leicht abgekühlt, aber dennoch warm genug, um eine ausreichende Zulauftemperatur für Heizzwecke zu erzielen.

Das Heizungswasser wird durch das Rohr 37 aus dem inneren 10 bzw. äußeren Behälter 1 nach außen geleitet, und von dort einem Plattenwärmetauscher 40, der den Kesselkreislauf von dem Heizkreislauf trennt, zugeführt. Auf der Primärseite (Kesselkreislauf) des Plattenwärmetauschers 40 ist eine modulierend arbeitende (drehzahlgeregelte) Pumpe 41 angeordnet, welche über eine Elektronik entsprechend der Wärmeabnahme auf der. Sekundärseite (Heizkreislauf) des Plattenwärmetauschers 40, geregelt wird. Die genannte Elektronik enthält in der gesamten Feuerungsüberwachung auch die Überwachung der Heizkreislaufregelung, indem die Temperaturdifferenz im Heizkreislauf ebenfalls konstant gehalten wird. Letzteres wird durch eine weitere, auf der Sekundärseite angeordnete (drehzahlgeregelte) Pumpe 42 und über (Vorlauf-)Temperatursensoren 7, 34 und (Rücklauf-)Temperaturoeneoren 43, 44 erreicht.

Mit dem in Fig. 1 und 2 dargestellten, erfindungsgemäßen Brennwertkessel lassen sich in Verbindung mit dem 3-Wege-Ventil 28 oder dem Plattenwärmetauscher 40 regelungstechnisch eine vielzahl unterschiedlicher Schaltungen realisieren. Die Wärmeanforderung über eine witterungsgeführte Regelung im Feuerungsautomaten kann bspw. einerseits mit einen Fernversteller und andererseits mit einer Raumaufschaltung erfolgen, was dem Feuerungsautomaten per DIL-Schalter mitgeteilt werden muß, da das jeweilige Betriebsverhalten sich erheblich voneinander unterscheidet. Alternativ kann die Wärmeanforderung nur über eine Raumregelung erfolgen.

Im folgenden wird beispielhaft die Wirkungsweise des erfindungsgemäßen Brennwertkessels mit einem Plattenwärmetauscher 40 bei der Wärmeanforderung über eine witterungsgeführte Regelung im Feuerungsautomaten mit einem Fernversteller beschrieben. Durch den Wert eines (Außen-)Temperaturfühlers 46 errechnet der Feuerungsautomat eine mittlere Heizkreislauftemperatur von z.B. 40°C. Daraufhin wird die Pumpe 42 modulierend in Betrieb genommen und der Massenstrom im Heizkreislauf auf den im Feuerungsautomaten errechneten Rücklaufwert, der über den (Rücklauf-)Temperatursensor 43 erfaßt wird, eingestellt. Der Feuerungsautomat wird ebenfalls den Vorlaufwert des Heizukreislaufes errechnen und die Pumpe 41 modulierend in Betrieb nehmen. Die Drehzahl der Pumpe 41 wird solange erhöht, bis der für den (Vorlauf-)Temperatursensor 34 ermittelte Wert erreicht ist. Der Brenner 18 wird über den vom Feuerungsautomaten vorgegebenen Wert für den Temperatursensor 7 gleitend zweistufig geregelt.

Im Falle der Trinkwasserbereitung, welche immer Vorrang hat, wird die Pumpe 42 abgeschaltet, wenn der Sollwert am (Kessel-)Temperatursensor 7 unter den Wert für die Brennerstufe "2" fällt. Dies bedeutet, daß während der Trinkwasserbereitung durchaus parallel geheizt werden kann. Der Kessel erwärmt das Trinkwasser über die Pumpe 41 und den Brenner 18, der zweistufig vom (Kessel-)Temperatursensor 7 überwacht wird, solange, bis der vom Feuerungsautomaten vorgegebene Sollwert des Trinkwassers erreicht ist. Wenn beispielsweise keine Wärmeabnahme im Heizsystem erfolgt (z.B. Sommerbetrieb) und die Trinkwassererwärmung gerade abgeschlossen ist, d.h. daß die Trinkwassertemperatur am (Speicher-)Temperatursensor 25 erreicht wurde, bleibt die Pumpe 41 dennoch aktiviert um einen möglichen Temperaturunterschied, bspw. aufgrund einer Schichtung, im inneren (Trinkwasser-)Behälter 10 auszugleichen. Infolgedessen steht der Speicherinhalt des inneren Behälters 10 immer vollständig zur Verfügung. Falls eine Wärmeanforderung seitens des Heizkreislaufes ansteht, wird der Heizbetrieb ohne Verzögerung durch Einschalten der Pumpe 42 wieder aufgenommen. Da die Wärmeabnabme bzw. die Temperatur im Heizkreislauf ausschließlich über die Temperatursensoren 34 und 43 ermittelt werden kann, darf die Pumpe 42 im Heizbetrieb normalerweise nicht abgeschaltet werden.

Da die Pumpen modulierend im Bereich von 30-100 % betrieben werden können, kann es bei sehr geringer Wärmeabnahme, bspw. wenn nur ein Heizkörper geöffnet ist, zu einer Verkleinerung der vom Feuerungsautomaten vorgegebenen Temperaturdifferenz kommen. Die Rücklauftemperatur wird dabei zwangsläufig ansteigen, wenn 30 % Pumpenleistung einen zu großen Massenstrom für die abgenommene Wärme bedeutet. Zu diesem Zeitpunkt wird die Pumpe 41 nur noch intermittierend laufen, so daß keine Überhöhung der Vorlauftemperatur am Temperatursensor 34 eintritt.

Sofern alle Heizkörperventile geschlossen sind und im Heizkreislauf keine Wärme abgenommen wird, öffnet ein vor der Heizeinrichtung 31 installiertes Überströmventil 45, wodurch die Rücklauftemperatur ansteigt und die vom Feuerungsautomaten errechnete Temperatur am (Rücklauf-)Temperatursensor 43 überschritten wird. Zuvor war bereits die vorlauftemperatur am Temperatursensor 34 auf den Sollwert angestiegen, so daß die Pumpe 41 steht. Wenn in diesem Zustand die Temperatur des Temperatursensors 43 den Wert des (Außen-)Temperaturfühlers 46 erreicht, darf die Pumpe 42 abgeschaltet werden, da es sich nur noch um eine kleine Wassermenge (hydraulischer Kurzschluß durch Überströmventile) handelt. Die Abschaltung der Pumpe 42 muß jedoch zeitlich begrenzt sein (z.B. 5 min.), da bei Stillstand der Pumpe 42 eine eventuelle Wärmeabnahme im Heizsystem nicht zu erkennen ist. Nach Ablauf der Abschaltzeit wird die Pumpe 42 mit kleiner Drehzahl wieder in Betrieb genommen und die Temperatursensoren 34 und 43 können den Wärmebedarf erneut erfassen.

Das Betriebsverhalten bei einer Wärmeanforderung über eine witterungsgeführte Regelung im Feuerungsautomaten mit einer Raumaufschaltung unterscheidet sich davon u.a. dadurch, daß die Abschaltung der Pumpe 42 grundsätzlich bei Überschreitung der Raumist- zur Raumsolltemperatur erfolgen darf. Aufgrund einer entsprechenden Regelungstechnik kann sich der Feuerungsautomat bei einer Abschaltung der Pumpe 42 nach einem festen PWM-Signal richten, so daß es hierbei häufiger zu Abschaltung der Pumpe 42 kommen wird, wodurch die mittlere Temperatur des Heizkreislaufes der entsprechenden Raumtemperatur schneller und besser angepaßt wird. Bei den genannten Extremfällen, d.h. wenn nur ein Heizkörper geöffnet ist oder alle Heizkörperventile geschlossen sind, reagiert die Regelung mit Raumaufschaltung in gleicher Weise wie die zuvor genannte Regelung mit Fernversteller, wobei hier die Pumpe 42 jedoch grundsätzlich nur abgeschaltet werden darf, wenn der Raumistwert der Temperatur erreicht wurde.

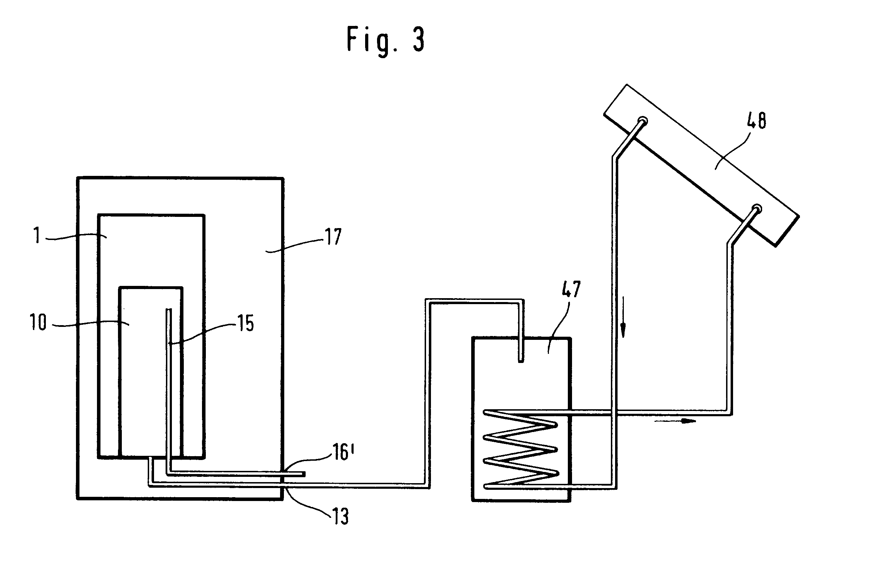

Fig. 3 zeigt eine schematische Darstellung des erfindungsgemäßen Brennwertkessels zum Erwärmen und Speichern von Trink- und Heizungswasser in Verbindung mit der Nutzung von Solarenergie. Der Kaltwasseranschluß für Trinkwasser 13 ist mit einem Trinkwasserspeicher 47 verbunden, in welchem Trinkwasser über Solarkollektoren 48 vorgewärmt wird. Dieses vorgewärmte Trinkwasser wird in den inneren Behälter 10 geleitet, in welchem es für die Warmwasserbereitung zur Verfügung steht, d.h. durch das Rohr 15 zu entnehmen ist, und zudem über die Speicherbehälteroberfläche das Heizungswasser erwärmen kann, sofern dies nicht zuvor von dem Brenner erwärmt worden ist. Letzteres ist insbesondere in den Sommermonaten der Fall, so daß dann das Heizungswasser zur gelegentlichen Benutzung, bspw. an kühlen Sommertagen, von dem durch Solarkollektoren vorgewärmten Trinkwasser erwärmt wird, was aus ökologischer Sicht eine sehr vorteilhafte Kombination darstellt.

### Bezugszeichenliste

- 1: äußerer (Heizungswasser-)Behälter
- 2: Heizungswasserrücklaufanschluß
- 3: unterer Bereich der Seitenwand (von 1)
- 4: Heizungswasservorlaufanschluß
- 5: Oberseite (von 1)
- 6: Unterseite (von 1)
- 7: Temperatursensor
- 8: oberer Bereich (von 1)
- 9: unterer Bereich (von 1)
- 10: innerer (Trinkwasser-)Behälter
- 11: Unterseite (von 10)
- 12: Oberseite (von 10)
- 13: Kaltwasseranschluß für Trinkwasser
- 14: oberer Bereich (von 10)
- 15: Warmwasserrohr
- 16, 16': Warmwasseranschluß für Trinkwasser
- 17: Gehäuse
- 18: Brennraum
- 19: Boden (von 18)
- 20: Wärmetauscherrohr
- 21: Abgasanschluß
- 22: Grundfläche (von 10)
- 23: Grundfläche (von 1)
- 24: Zwischenraum
- 25: (Speicher-)Temperatursensor
- 26: Seitenwand/Mantelfläche (von 10)
- 27: Heizungswasservorlaufrohr
- 28: 3-Wege-Ventil
- 29: Abzweigrohr
- 30: Heizungswasserrücklaufrohr
- 31: Heizeinrichtung
- 32: Stellmotor
- 33, 33': Regeleinrichtung
- 34: (Vorlauf-)Temperatursensor
- 35: Rohr
- 36: Pumpe
- 37: Rohr
- 38: unterer Bereich (von 10)
- 39: Wendel
- 40: Plattenwärmetauscher
- 41: (drehzahlgeregelte) Pumpe
- 42: (drehzahlgeregelte) Pumpe
- 43: (Rücklauf-)Temperatursensor
- 44: (Rücklauf-)Temperatursensor
- 45: Überströmventil
- 46: (Außen-)Temperaturfühler
- 47: Trinkwasserspeicher
- 48: Solarkollektor

## Patentansprüche

1. Brennwertkessel zum Erwärmen und Speichern von Brauchwasser und Heizungswasser, mit einem äußeren Behälter (1) zur Aufnahme von Heizungswasser, welches ihm durch einen in seinem unterem Bereich (9) angeordneten Heizungswasser-Rücklaufanschluß (2) zuzuleiten und durch einen an seiner Oberseite (5) angeordneten Heizungswasser-Vorlaufanschluß (4) zu entnehmen ist; einem konzentrisch zu dem äußeren Behälter (1) in diesem angeordneten inneren Behälter (10) zur Aufnahme von Trinkwasser, welches ihm durch einen an seiner Unterseite (11) angeordneten Kaltwasseranschluß (13) zuzuleiten und durch einen an seiner Oberseite (12) angeordneten Warmwasseranschluß (16) zu entnehmen ist; und mit einem an einem Ende im äußeren Behälter (1) angeordneten Brennraum (18), aus dem die heißen Verbrennungsgase mit wenigstens einem durch den Zwischenraum (24) zwischen den beiden Behältern (1, 10) verlaufenden, als Wärmetauscher dienenden Rohr (20) einem Abgasanschluß (21) zugeleitet werden, dadurch gekennzeichnet, daß das in an sich bekannter Weise von den Verbrennungsgasen von oben nach unten durchströmte Wärmetauscherrohr (20) spiralförmig ausgebildet und konzentrisch zum inneren Behälter (10) angeordnet ist, dessen Speichervolumen größer als das Speichervolumen des äußeren Behälters (1) ist, wobei der Durchmesser des Wärmetauscherrohres (20) so gewählt ist, daß es den Zwischenraum (24) zwischen den beiden Behältern (1, 10) in horizontaler Richtung nahezu vollständig ausfüllt.

2. Brennwertkessel nach Anspruch 1, dadurch gekennzeichnet, daß im oberen Bereich (8) des äußeren Behälters (1) ein Temperatursensor (7) angeordnet ist, und daß im inneren Behälter (10) ein (Speicher-)Temperatursensor (25) angeordnet ist.

3. Brennwertkessel nach Anspruch 1 oder 2, dadurch gekennzeichnet, daß im oberen Bereich (14) des inneren Behälters (10) ein Warmwasserrohr (15) angeschlossen ist, welches zum unteren Bereich (38) des inneren Behälters (10) hin verläuft, an dem ein Warmwasseranschluß (16') für Trinkwasser angeordnet ist.

4. Brennwertkessel nach einem oder mehreren der vorhergehenden Ansprüche, dadurch gekennzeichnet, daß die Steigung des spriralförmigen Wärmetauscherrohres (20) im unteren Bereich (9) des äußeren Behälters (1) kleiner als in dessen oberem Bereich (8) ist.

5. Brennwertkessel nach einem oder mehreren der vorhergehenden Ansprüche, dadurch gekennzeichnet, daß die spiralförmigen Wärmetauscherrohre (20) als Doppelspiralen ausgebildet sind.

6. Brennwertkessel nach einem oder mehreren der vorhergehenden Ansprüche, dadurch gekennzeichnet, daß die Grundfläche (22) des inneren Behälters (10) erheblich größer als die halbe Grundfläche (23) des äußeren Behälters (1) ist.

7. Brennwertkessel nach Anspruch 6, dadurch gekennzeichnet, daß die Grundfläche (22) des inneren Behälters (10) 70 % - 85 % der Grundfläche (23) des äußeren Behälters (1) beträgt.

8. Brennwertkessel nach Anspruch 6, dadurch gekennzeichnet, daß die Grundfläche (22) des inneren Behälters (10) 55 % - 70 % der Grundfläche (23) des äußeren Behälters (1) beträgt.

9. Brennwertkessel nach einem oder mehreren der vorhergehenden Ansprüche, dadurch gekennzeichnet, daß ein Rohr (37) vom oberen Bereich (8) des äußeren Behälters (1) in den inneren Behälter (10) verläuft, und in dessen unterem Bereich (38) als Wendel (39) ausgebildet ist.

10. Brennwertkessel nach einem oder mehreren der vorhergehenden Ansprüche, dadurch gekennzeichnet, daß zum einen ein Heizungswasservorlaufrohr (27) und zum anderen ein Heizungswasserrücklaufrohr (30) über ein Abzweigrohr (29) mit einem 3-Wege-Ventil (28) verbunden sind, welches von einem Stellmotor (32), der mit einer Regeleinrichtung (33) verbunden ist, geschaltet/gesteuert wird.

11. Brennwertkessel nach einem oder mehreren der vorhergehenden Ansprüche, dadurch gekennzeichnet, daß am Heizungswasservorlaufrohr (27) ein Rohr (35) angeschlossen ist, durch welches Heizungswasser mittels einer Pumpe (36) zum Heizungswasserrücklaufrohr (30) geleitet wird.

12. Brennwertkessel nach einem oder mehreren der Ansprüche 1 bis 9, dadurch gekennzeichnet, daß das Heizungswasservorlaufrohr (27) und das Heizungswasserrücklaufrohr (30) mit einem Plattenwärmetauscher (40) verbunden sind, wobei vor und hinter dem Plattenwärmetauscher (40) Pumpen (41, 42) am Heizungswasservorlaufrohr (27) angeordnet sind.

13. Brennwertkessel nach einem oder mehreren der vorhergehenden Ansprüche, dadurch gekennzeichnet, daß wenigstens ein Vorlauftemperatursensor (34) an dem Heizungswasservorlaufrohr (27) und mehrere Rücklauftemperatursensoren (43, 44) an dem Heizungswasserrücklaufrohr (30) angeordnet sind.

14. Brennwertkessel nach einem der vorhergehenden Ansprüche, dadurch gekennzeichnet, daß ein (Außentemperaturfühler (46) und/oder der Speichertemperatursensor (25) und/oder die Temperatursensoren (7, 34, 43, 44) Bestandteile einer Regeleinrichtung (33') sind.

15. Brennwertkessel nach einem oder mehreren der vorhergehenden Ansprüche, dadurch gekennzeichnet, daß der Kaltwasseranschluß für Trinkwasser (13) mit einem Trinkwasserspeicher (47) verbunden ist, welcher insbesondere mittels eines Solarkollektors (48) durch Strahlungsenergie zu beheizen ist.

16. Brennwertkessel nach einem oder mehreren der vorhergehenden Ansprüche, dadurch gekennzeichnet, daß ein Überströmventil (45) vor der Heizeinrichtung (31) angeordnet ist, durch welches Heizungswasser vom Heizungswasservorlaufrohr (27) zum Heizungswasserrücklaufrohr (30) geleitet wird.

## Claims

1. A gross calorific value boiler for heating and storing service water and heating water, comprising an outer tank (1) to receive heating water which is fed to it via a heating water return connection (2) disposed in its bottom zone (9) and which is withdrawn via a heating water flow connection (4) disposed at its top (5); an inner tank (10) disposed in and concentrically to the outer tank (1) to receive drinking water, which is fed to it via a cold water connection (13) disposed at its bottom (11) and which is withdrawn via a warm water connection (16) disposed at its top (12); and with a combustion chamber (18) which is disposed at one end in the outer tank (1) and from which the hot combustion gases are fed to a flue gas connection (21) by means of at least one pipe (20) which extends through the gap (24) between the two tanks (1, 10) and which serves as a heat exchanger, characterised in that the heat exchanger pipe (20), through which the combustion gases flow downwardly in manner known per se, is of spiral construction and is disposed concentrically to the inner tank (10), the storage volume of which is greater than the storage volume of the outer tank (1), the diameter of the heat exchanger pipe (20) being so selected as to fill the gap (24) between the two tanks (1, 10) practically completely in the horizontal direction.

2. A boiler according to claim 1, characterised in that a temperature sensor (7) is disposed in the top zone (8) of the outer tank (1) and in that a (storage) temperature sensor (25) is disposed in the inner tank (10).

3. A boiler according to claim 1 or 2, characterised in that a warm water pipe (15) is connected in the top zone (14) of the inner tank (10) and extends to the bottom zone (38) of the inner tank (10) where a warm water connection (16') for drinking water is disposed.

4. A boiler according to any one or more of the preceding claims, characterised in that the pitch of the spiral heat exchanger pipe (20) in the bottom zone (9) of the outer tank (1) is smaller than in its top zone (8).

5. A boiler according to any one or more of the preceding claims, characterised in that the spiral heat exchanger pipes (20) are constructed as double spirals.

6. A boiler according to any one or more of the preceding claims, characterised in that the base area (22) of the inner tank (10) is considerably larger than half the base area (23) of the outer tank (1).

7. A boiler according to claim 6, characterised in that the base area (22) of the inner tank (10) is equal to 70 to 85% of the base area (23) of the outer tank (1).

8. A boiler according to claim 6, characterised in that the base area (22) of the inner tank (10) is equal to 55 to 70% of the base area (23) of the outer tank (1).

9. A boiler according to any one or more of the preceding claims, characterised in that a pipe (37) extends from the top zone (8) of the outer tank (1) into the inner tank (10) and is constructed as a coil (39) in the bottom zone (38) thereof.

10. A boiler according to any one or more of the preceding claims, characterised in that, on the one hand, a heating water flow pipe (27) and, on the other hand, a heating water return pipe (30) are connected via a branch pipe (29) to a three-way valve (28) which is actuated/controlled by a servomotor (32) connected to a regulating device (33).

11. A boiler according to any one or more of the preceding claims, characterised in that a pipe (35) via which heating water is fed by a pump (36) to the heating water return pipe (30) is connected to the heating water flow pipe (27).

12. A boiler according to any one or more of claims 1 to 9, characterised in that the heating water flow pipe (27) and the heating water return pipe (30) are connected to a plate heat exchanger (40), pumps (41, 42) being disposed on the heating water flow pipe (27) upstream and downstream of the plate heat exchanger (40).

13. A boiler according to any one or more of the preceding claims, characterised in that at least one flow temperature sensor (34) is disposed on the heating water flow pipe (27) and a plurality of return temperature sensors (43, 44) are disposed on the heating water return pipe (30).

14. A boiler according to any one of the preceding claims, characterised in that an external temperature sensor (46) and/or the storage temperature sensor (25) and/or the temperature sensors (7, 34, 43, 44) are parts of a regulating device (33').

15. A boiler according to any one or more of the preceding claims, characterised in that the cold water connection for drinking water (13) is connected to a drinking water storage tank (47) which is heated more particularly by a solar collector (48) by radiation energy.

16. A boiler according to any one or more of the preceding claims, characterised in that an overflow valve (45) via which heating water is fed from the heating water flow pipe (27) to the heating water return pipe (30) is disposed upstream of the heating device (31).

## Revendications

1. Chaudière à condensation pour chauffer et stocker de l'eau à usage sanitaire et de l'eau de chauffage, comportant un récipient extérieur (1) destiné à recevoir de l'eau de chauffage qui doit lui être amenée par un branchement descendant d'eau de chauffage (2) agencé dans sa zone inférieure (9) et qui doit lui être reprise par un branchement montant d'eau de chauffage (4) agencé sur sa face supérieure (5) ; un récipient intérieur (10), concentrique au récipient extérieur (1) et agencé dans celui-ci, destiné à recevoir de l'eau potable qui doit lui être amenée par un branchement d'eau froide (13) agencé sur sa face inférieure (11) et qui doit lui être reprise par un branchement d'eau chaude (16) agencé sur sa face supérieure (12) ; et une chambre de combustion (18) qui est agencée à une extrémité dans le récipient extérieur (1) et à partir de laquelle les gaz chauds de la combustion sont conduits à un branchement de gaz d'échappement (21) avec au moins un tuyau (20) servant d'échangeur de chaleur et s'étendant à travers l'espace intermédiaire (24) entre les deux récipients (1, 10), caractérisée en ce que le tuyau échangeur de chaleur (20) traversé de haut en bas de manière connue en soi par les gaz de combustion est conçu en forme de spirale et est agencé de manière concentrique au récipient intérieur (10) dont le volume de stockage est supérieur au volume de stockage du récipient extérieur (1), le diamètre du tuyau échangeur de chaleur (20) étant choisi tel que celui-ci remplit presque complètement en direction horizontale l'espace intermédiaire (24) entre les deux récipients (1, 10).

2. Chaudière à condensation selon la revendication 1, caractérisée en ce qu'un capteur de température (7) est agencé dans la zone supérieure (8) du récipient extérieur (1) et en ce qu'un capteur de température (de stockage) (25) est agencé dans le récipient intérieur (10).

3. Chaudière à condensation selon la revendication 1 ou 2, caractérisée en ce qu'il est raccordé dans la zone supérieure (14) du récipient intérieur (10) un tuyau d'eau chaude (15) qui s'étend vers la zone inférieure (38) du récipient intérieur (10) dans laquelle est agencé un branchement d'eau chaude (16') pour de l'eau potable.

4. Chaudière à condensation selon une ou plusieurs des revendications précédentes, caractérisée en ce que le pas du tuyau échangeur de chaleur (20) en forme de spirale est plus petit dans la zone inférieure (9) du récipient extérieur (1) que dans sa zone supérieure (8).

5. Chaudière à condensation selon une ou plusieurs des revendications précédentes, caractérisée en ce que les tuyaux échangeurs de chaleur (20) en forme de spirales sont conçus comme des doubles spirales.

6. Chaudière à condensation selon une ou plusieurs des revendications précédentes, caractérisée en ce que la surface de base (22) du récipient intérieur (10) est nettement plus grande que la moitié de la surface de base (23) du récipient extérieur (1).

7. Chaudière à condensation selon la revendication 6, caractérisée en ce que la surface de base (22) du récipient intérieur (10) vaut 70 % à 85 % de la surface de base (23) du récipient extérieur (1).

8. Chaudière à condensation selon la revendication 6, caractérisée en ce que la surface de base (22) du récipient intérieur (10) vaut 55 % à 70 % de la surface de base (23) du récipient extérieur (1).

9. Chaudière à condensation selon une ou plusieurs des revendications précédentes, caractérisée en ce qu'un tuyau (37) s'étend à partir de la zone supérieure (8) du récipient extérieur (1) jusque dans le récipient intérieur (10) et est conçu dans sa zone inférieure (38) comme une hélice (39).

10. Chaudière à condensation selon une ou plusieurs des revendications précédentes, caractérisée en ce que d'une part un tuyau montant d'eau de chauffage (27) et d'autre part un tuyau descendant d'eau de chauffage (30) sont reliés par l'intermédiaire d'un tuyau d'embranchement (29) à une soupape à trois voies (28) qui est commutée/commandée par un moteur de commande (32) qui est relié à un dispositif de réglage (33).

11. Chaudière à condensation selon une ou plusieurs des revendications précédentes, caractérisée en ce qu'il est raccordé au tuyau montant d'eau de chauffage (27) un tuyau (35) par lequel de l'eau de chauffage est conduite au moyen d'une pompe (36) vers le tuyau descendant d'eau de chauffage (30).

12. Chaudière à condensation selon une ou plusieurs des revendications 1 à 9, caractérisée en ce que le tuyau montant d'eau de chauffage (27) et le tuyau descendant d'eau de chauffage (30) sont reliés à un échangeur de chaleur à plaques (40), des pompes (41, 42) étant agencées sur le tuyau montant d'eau de chauffage (27) devant et derrière l'échangeur de chaleur à plaques (40).

13. Chaudière à condensation selon une ou plusieurs des revendications précédentes, caractérisée en ce qu'au moins un capteur de température d'aller (34) est agencé sur le tuyau montant d'eau de chauffage (27) et plusieurs capteurs de température de retour (43, 44) sont agencés sur le tuyau descendant d'eau de chauffage (30).

14. Chaudière à condensation selon une ou plusieurs des revendications précédentes, caractérisée en ce qu'un capteur de température extérieure (46) et/ou le capteur de température de stockage (25) et/ou les capteurs de température (7, 34, 43, 44) font partie d'un dispositif de réglage (33').

15. Chaudière à condensation selon une ou plusieurs des revendications précédentes, caractérisée en ce que le branchement d'eau froide (13) pour de l'eau potable est relié à un réservoir d'eau potable (47) qui est à chauffer notamment par énergie rayonnante au moyen d'un collecteur solaire (48).

16. Chaudière à condensation selon une ou plusieurs des revendications précédentes, caractérisée en ce qu'il est agencé avant le dispositif de chauffage (31) une soupape de trop-plein (45) par laquelle de l'eau de chauffage est conduite du tuyau montant d'eau de chauffage (27) au tuyau descendant d'eau de chauffage (30).
